# EUROPÄISCHE PATENTANMELDUNG

(11) **EP 2 009 769 A2**
(43) Veröffentlichungstag der Anmeldung: **31.12.2008**
(21) Anmeldenummer: 08103755.8
(22) Anmeldetag: 29.04.2008
(51) Int. Cl.: H02K 3/52

(54) **Wicklungsträger für einen Elektromotor mit einzelnen Spulenwicklungen**

(30) Priorität: 28.06.2007 DE 102007030002
(71) Anmelder: ROBERT BOSCH GMBH, 70442 Stuttgart (DE)
(72) Erfinder: Bauch, Christa, 71723, Grossbottwar (DE); Nguyen, Quoc-Dat, 72760, Reutlingen (DE); Nguyen, Ngoc-Thach, 71723, Grossbottwar (DE)

(57) **Zusammenfassung**

Die Erfindung betrifft einen Wicklungsträger, insbesondere für eine Statorwicklung, zum Aufbau eines Elektromotors. Der Wicklungsträger umfasst einen mit einer Innenausnehmung versehenen Trägerkörper (4) zum Aufsetzen auf einen Polkern (2) eines Stators, wobei an dem Trägerkörper (4) mindestens ein Ausrichtungselement (5) vorgesehen ist, um den Wicklungsträger im auf dem Polkern montierten Zustand auszurichten.

## Beschreibung

### Technisches Gebiet

Die Erfindung betrifft einen Wicklungsträger, insbesondere für eine Statorspule eines Elektromotors. Die Erfindung betrifft weiterhin die Aufbauweise eines Elektromotors mit Statorspulen.

### Stand der Technik

Elektromotoren umfassen im Wesentlichen ein Gehäuse, einen Ständer (Stator) sowie einen Läufer (Rotor). Der Stator kann aus einem Lamellenpaket gebildet sein, auf dem durch eine geeignete Wickeltechnik Spulen aufgebracht werden. Beispiele für Wickeltechniken sind Einzugswicklungen, Steckwicklungen, Flyer-Wicklungen sowie eine Nadelwicklung für Statoren mit festen Polschuhen.

Weiterhin können Wicklungsträger vorgesehen sein, die eine einfache Hohlkörpergestalt aus einem elektrisch isolierenden Material gebildet sind. Die Fixierung derartiger Wicklungsträger erfolgt meistens durch Kleben oder gemeinsam mit einschiebbaren Polschuhen in den Stator. Dies ist aufwendig und erschwert die Montage eines solchen Elektromotors erheblich.

Bei bisherigen Systemen werden die Statorspulen mit oder ohne Träger gewickelt, in geeigneter Weise verpackt und auf entsprechende Polanker eines Stators aufgeschoben und dort verklebt oder eingegossen. Um eine reibungslose Montage zu ermöglichen, ist ein Spiel zwischen dem Spuleninneren der Wicklung und den Polankern vorgesehen. In den Zwischenraum zwischen dem Inneren der Spulenwicklung und dem Polanker wird Klebstoff eingebracht, um die Spulenwicklung an dem entsprechenden Polanker zu fixieren. Durch das Spiel ist jedoch eine ordnungsgemäße Ausrichtung der Spulenwicklung an dem Stator sowohl in radialer Richtung als auch in Umfangsrichtung nicht gewährleistet. Es ist daher wünschenswert, Maßnahmen vorzusehen, mit denen bei einer solchen Montageweise eines Elektromotors die Ausrichtung der Statorspule bei gleichzeitig einfacherer Montage zu verbessern.

### Offenbarung der Erfindung

Es ist daher Aufgabe der vorliegenden Erfindung, einen Wicklungsträger zur Verfügung zu stellen, mit dem ein Stator für einen Elektromotor und dgl. in einfacher Weise aufgebaut werden kann. Weiterhin ist es Aufgabe der Erfindung, einen Wicklungsträger zum Aufbau eines Elektromotors zur Verfügung zu stellen, wobei eine erhöhte Zuverlässigkeit und ein besserer Wirkungsgrad des so aufgebauten Elektromotors gewährleistet ist.

Diese Aufgabe wird durch den Wicklungsträger nach Anspruch 1 sowie durch den Elektromotor gemäß dem nebengeordneten Anspruch gelöst.

Weitere vorteilhafte Ausgestaltungen der Erfindung sind in den abhängigen Ansprüchen angegeben.

Gemäß einem Aspekt ist ein Wicklungsträger, insbesondere für eine Statorwicklung, zum Aufbau eines Elektromotors vorgesehen. Der Wicklungsträger weist einen mit einer Innenausnehmung versehenen Trägerkörper zum Aufsetzen auf einen Polkern eines Stators auf. An dem Trägerkörper ist ein Ausrichtungselement vorgesehen, um den Wicklungsträger im auf dem Polkern montierten Zustand auszurichten.

Eine Idee der vorliegenden Erfindung besteht darin, einen Wicklungsträger zum Aufbau eines Elektromotors zur Verfügung zu stellen, wobei die Montage vereinfacht wird und gleichzeitig eine ordnungsgemäße Ausrichtung der mithilfe des Wicklungsträgers aufgebauten Statorspule ermöglicht wird. Dies wird durch eines oder mehrere entsprechende Ausrichtelemente erreicht, die eine ordnungsgemäße Ausrichtung der mit dem Wicklungsträger aufgebauten Statorspule ermöglichen.

Weiterhin können als Ausrichtungselement ein oder mehrere Stützelemente bzw. Abstützelemente vorgesehen sein, die an einem Ende des Trägerkörpers nach außen abstehen, so dass sich die Stützelemente im montierten Zustand an einer Fläche des Stators anlegen.

Ein Winkel zwischen einer Längsachse des Trägerkörpers und dem abstehenden Stützelement kann so gewählt sein, dass der Winkel gleich oder größer ist als ein Winkel zwischen der Längsachse des Polkerns und einer Innenfläche des Stators, an der das Stützelement anliegt, so dass die Ausrichtung des Trägerkörpers durch die Anlagestellen der Stützelemente an der Innenfläche des Stators bestimmt ist.

Weiterhin können ein oder mehrere Befestigungselemente vorgesehen sein, die ausgebildet sind, um mit einer Haltevorrichtung an dem Polkern zusammen zu wirken, so dass der Trägerkörper an dem Polkern gehalten wird.

Gemäß einer Ausführungsform können die Befestigungselemente als Rastelemente ausgebildet sein, um in entsprechende Halteausnehmungen an dem entsprechenden Polkern einzugreifen.

Der Winkel zwischen einer Längsachse des Trägerkörpers und dem abstehenden Stützelement kann weiterhin so gewählt sein, dass er größer ist als der Winkel zwischen der Längsachse des Polkerns und der Innenfläche des Stators, an der das Stützelement anliegt, und wobei das eine oder die mehreren Stützelemente (5) elastisch verformbar sind, so dass die Stützelemente im durch die Befestigungselemente fixierten Zustand elastisch verformt an der Innenfläche des Stators anliegen und eine Kraft entgegen der Aufsetzrichtung des Trägerkörpers auf den Polkern wirkt. Die Stützelemente üben somit eine Gegenspannkraft aus, um die Gegenflächen der Schnappnasen an entsprechende Flächen des Polkerns anzudrücken und damit die Spule ordnungsgemäß zu positionieren und zu fixieren.

Gemäß einer weiteren Ausführungsform ist an mindestens einem Ende des Trägerkörpers ein zumindest teilweise umlaufender Wicklungsfixierkragen vorgesehen, um eine Wicklung auf dem Trägerkörper zu halten.

Weiterhin kann an einer Außenseite des Trägerkörpers eine Wicklungspositioniereinrichtung vorgesehen sein, um eine darauf aufgebrachte Wicklung zu halten.

Weiterhin können an einer Innenseite des Trägerkörpers eine oder mehrere Erhebungen, insbesondere in Form von länglichen Erhebungen in Richtung einer Mittenachse des Trägerkörpers, vorgesehen sein, um sich beim Aufsetzen des Wicklungsträger auf den entsprechenden Polkern zumindest teilweise elastisch zu verformen und so den Wicklungsträger spielfrei an dem Polkern zu fixieren bzw. zu zentrieren.

Gemäß einem weiteren Aspekt ist ein Elektromotor mit einem Polkern und dem darauf aufgebrachten obigen Wicklungsträger vorgesehen. Insbesondere kann eine Haltevorrichtung an dem Polkern vorgesehen sein, um mit dem Befestigungselement zusammen zu wirken, so dass der Trägerkörper an dem Polkern gehalten wird.

### Kurzbeschreibung der Zeichnungen

Bevorzugte Ausführungsformen der Erfindung werden nachfolgend anhand der beigefügten Zeichnungen näher erläutert. Es zeigen:
Fig. 1 eine perspektivische Darstellung eines Stators mit Polschuhen, auf denen Spulen mit jeweils einem Wicklungsträger gemäß einer Ausführungsform der Erfindung aufgebracht sind;
Fig. 2 eine Draufsicht auf die Statoranordnung der Fig. 1;
Fig. 3 eine Draufsicht auf die Statoranordnung der Fig. 1, wobei drei Statorspulen entfernt sind;
Fig. 4 eine Draufsicht auf eine Statoranordnung der Fig. 1, wobei eine der Statorspulen im Querschnitt dargestellt ist;
Fig. 5 eine Statorspule auf einem Wicklungsträger gemäß einer Ausführungsform der Erfindung;
Fig. 6 eine weitere Ansicht eines mit seiner Statorwicklung versehenen Wicklungsträgers;
Fig. 7, Fig. 8, Fig. 9 und Fig. 10 verschiedene Ansichten eines Wicklungsträgers gemäß einer Ausführungsform der Erfindung.

### Ausführungsformen der Erfindung

In den nachfolgenden Figuren bezeichnen gleiche Bezugszeichen Elemente gleicher oder vergleichbarer Funktion.

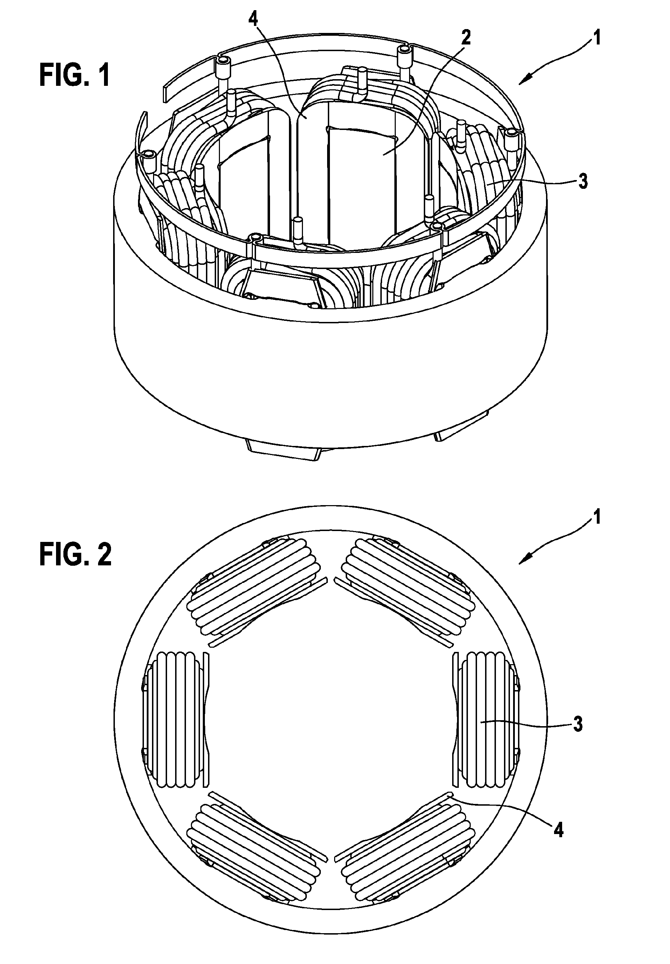

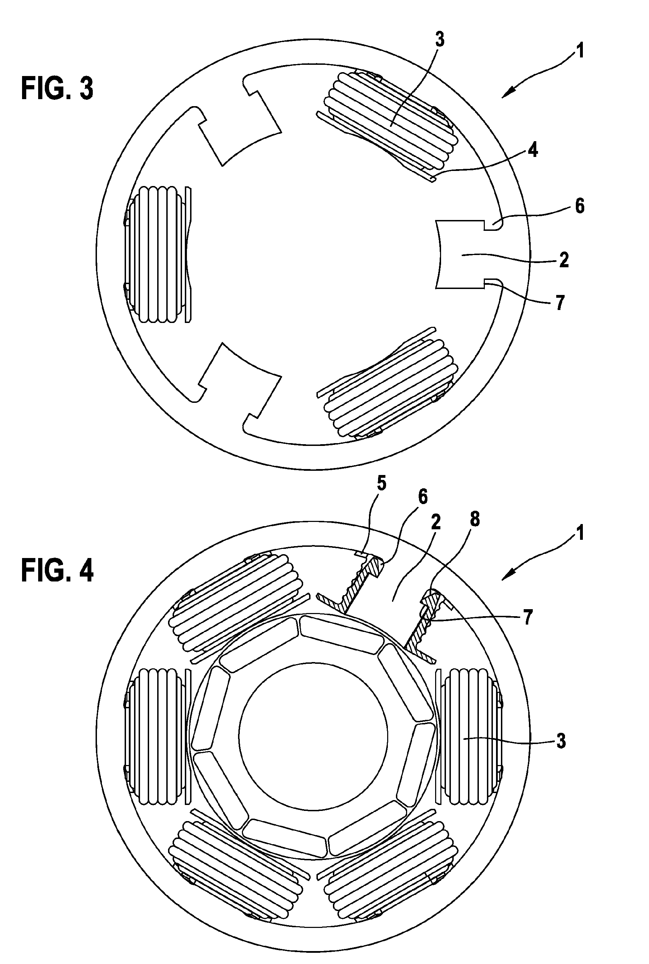

In den Figuren 1 bis 4 ist eine Statoranordnung eines Elektromotors dargestellt. Der Stator 1, der z.B. als Statorlamellenpaket ausgebildet ist, umfasst in dem gezeigten Ausführungsbeispiel sechs nach innen gerichtete Polkerne 2, auf denen jeweils eine Statorspule 3 angeordnet ist. Die Statorspulen 3 sind jeweils auf einem Trägerkörper 4 eines Wicklungsträgers aufgebracht, der eine Wicklung der Statorspule 3 außerhalb der Statoranordnung ermöglicht. Aus den Figuren 3 und 4 ist erkennbar, dass die Polkerne 2 des Stators 1 an ihrem am Stator 1 liegenden Ende einen kleineren Querschnitt aufweisen, so dass Halteausnehmungen 6 mit Befestigungskanten gebildet sind, die zum Befestigen der Trägerkörper 4 der Wicklungsträger der Statorspulen 3 dienen.

Die Größen der Polkerne 2 und der Polnute, d.h. der Abstand zwischen den Polkernen 2 an dem Stator 1 sind so gewählt, dass die Statorspulen 3 bei der Montage, d.h. beim Aufsetzen auf die entsprechenden Polkerne 2 in radialer Richtung, seitlich gegenseitig nicht beschädigt werden können.

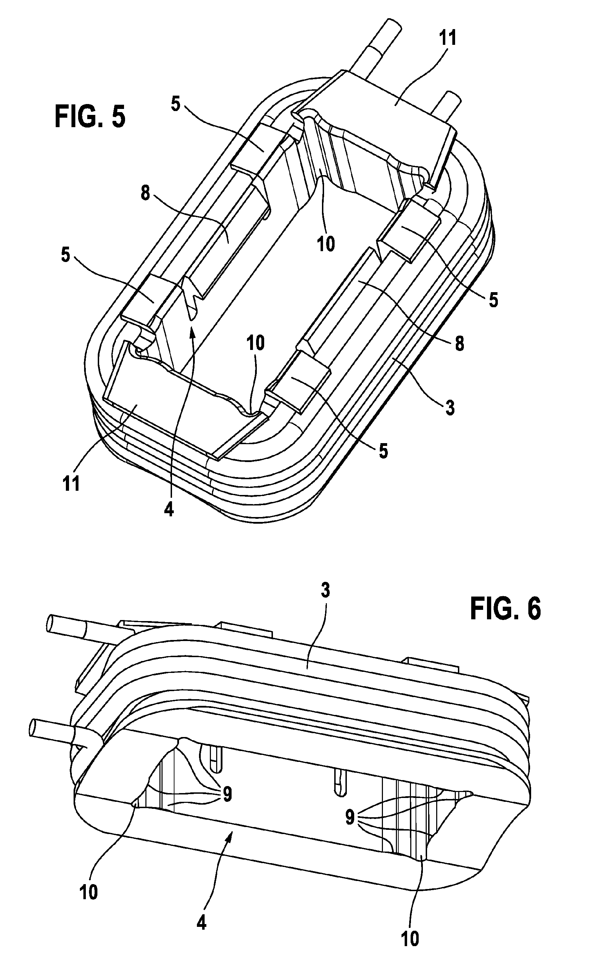

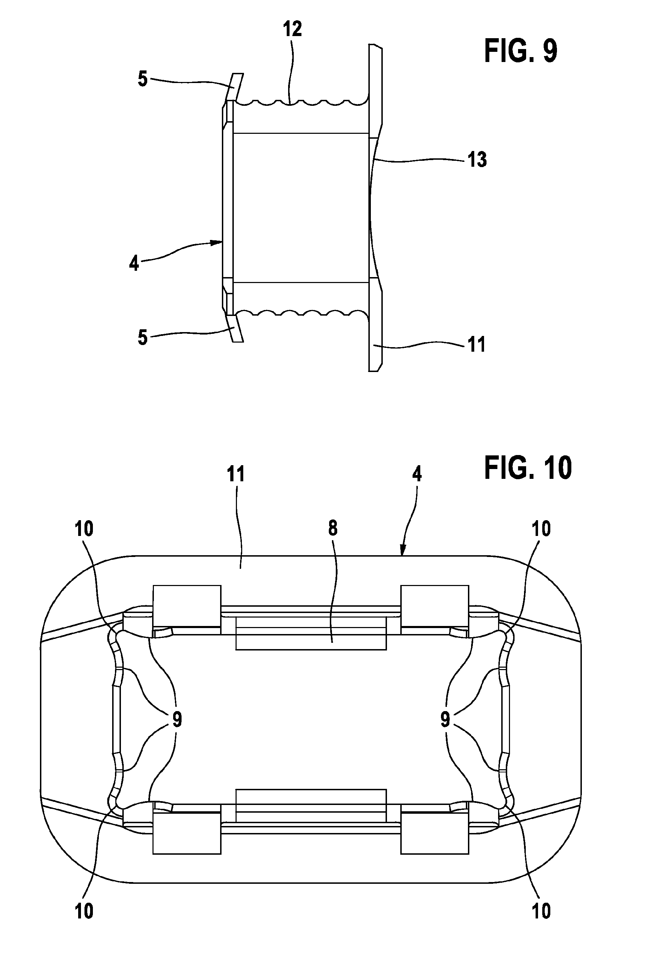

Um die Statorspule 3 einfach an dem Polkern 2 des Stators 1 zu montieren, auszurichten und zu befestigen, kann der verwendete Trägerkörper 4 Ausrichtungselemente und/oder Befestigungselemente aufweisen, die im Detail aus den Figuren 5 bis 10 ersichtlich sind.

In den Figuren 5 bis 10 ist eine Ausführungsform eines Wicklungsträgers mit und ohne der Wicklung einer Statorspule 3 dargestellt.

Der Trägerkörper 4 des Wicklungsträgers ist allgemein als zylindrisches (hohlquaderförmiges) Element vorzugsweise mit offenen Enden ausgebildet, so dass eine Innenausnehmung mit vorzugsweise einem rechteckigen Querschnitt gebildet wird. Der rechteckige Querschnitt entspricht im Wesentlichen dem Querschnitt eines der Polkerne 2 an dem Stator 1, so dass der Wicklungsträger auf diesen aufgesetzt werden kann. Auch andere Querschnitte der Innenausnehmung des Trägerkörpers 4 sowie konische und teilkonische Ausformungen der Innenausnehmung des Trägerkörpers 4 sind denkbar, solange dieser auf einen entsprechend geformten Polkern 2 der Statoranordnung 1 aufsetzbar ist. Weiterhin ist auch denkbar, dass die Innenausnehmung nur einseitig in dem Wicklungsträger ausgebildet ist.

Der Wicklungsträger ist vorzugsweise aus einem nicht-leitenden elastisch verformbaren Material ausgebildet, wie z.B. einem Kunststoff, und vorzugsweise durch Spritzgießen hergestellt. An dem Statorende, mit dem die mithilfe des Wicklungsträgers gefertigten Statorspule 3 auf den Polkern 2 der Statoranordnung 1 aufgesetzt wird, sind als Ausrichtungselemente Stützelemente 5 vorzugsweise nahe der vier Ecken (bei einem rechtwinkligen Querschnitt der Ausnehmung) vorgesehen, die im Wesentlichen von dem zylindrischen Trägerkörper 4 nach außen abstehen.

Um sich besser an die Innenfläche des im Wesentlichen kreisförmigen Stators 1 anzulehnen, kann die Innenfläche des Wicklungsträgers 4 und der Stützelemente 5 einen Winkel kleiner als 90° (spitzer Winkel) einschließen. Beim Aufsetzen des Wicklungsträgers 4 auf einen entsprechenden Polkern 2 wird die so gebildete Statorspule 3 vollständig auf den Polkern 2 aufgeschoben, bis die Stützelemente 5 an der Innenfläche des zylinderförmigen Stators 1 anliegen. Dadurch definieren die Stützelemente 5 die Ausrichtung der mit dem Wicklungsträger gebildete Statorspule 3, d.h. einer Mittenachse des zylinderförmigen Wicklungsträgers 4 bezüglich der Innenfläche der Statorspule 3.

Vorzugsweise sind die Stützelemente 5 einander gegenüberliegend bezüglich einer längeren Seite des rechteckigen Querschnitts angeordnet, so dass sie von dort in entgegen gesetzte Richtungen abstehen. Vorzugsweise zwischen den auf einer Seite angeordneten Stützelementen 5 können eine oder mehrere, vorzugsweise zwei Schnappnasen 8 als radiale Befestigungselemente angeordnet sein, die beim Einschieben des Wicklungsträgers 4 auf den Polkern 2 hinter eine entsprechende Rastkante 7 der jeweiligen Halteausnehmung 6 einrasten, so dass der Wicklungsträger auf dem entsprechenden Polkern 2 fixiert ist.

Vorzugsweise ist der Wicklungsträger aus einem leicht elastischen Material ausgebildet und der Winkel zwischen den Stützelementen und der Mittenachse des Wicklungsträgers 4 (in Richtung parallel zur Längsachse des zylindrisch ausgebildeten Wicklungsträgers) in einem größeren Winkel zueinander angeordnet sein, als beim Einschieben des Wicklungsträgers 4 auf den Polkern 2 zwischen der Innenfläche des Stators 1 und der Richtung der Innenfläche des Trägerkörpers 4 an der Kontaktstelle des Anliegens der Stützelemente 5 an der Innenfläche des Stators 1 gebildet wird. Die Halteausnehmungen 6 des jeweiligen Polkerns 2, die Stützelemente 5 sowie die Schnappnasen 8 sind so ausgebildet, dass zum Einrasten der Schnappnasen 8 hinter die Rastkante 7 der Wicklungsträger auf den entsprechenden Polkern 2 in Richtung der Innenfläche des Stators gedrückt werden muss, so dass die Stützelemente 5 leicht elastisch in der einer Aufsetzkraft entgegensetzter Richtung gebogen werden und dadurch eine der Aufsetzkraft entgegen wirkende Kraft auf den Wicklungsträger ausgeübt wird. Dadurch werden die Schnappnasen 8, die inzwischen in die entsprechenden Halteausnehmungen 6 eingerastet sind gegen die Rastkanten des entsprechenden Polkerns 2 gedrückt. Dadurch wird eine zuverlässige Befestigung der mit dem Wicklungsträger gebildeten Statorspulen 3 an dem entsprechenden Polkern 2 gewährleistet.

Weiterhin können an beliebiger Stelle der Innenfläche des zylindrisch ausgebildeten Trägerkörpers 4 eine oder mehrere Erhebungen 9 ausgebildet sein, die beim Aufschieben des Wicklungsträgers 4 auf den Polkern 2 gegen eine Seitenfläche des Polkerns 2 drücken und somit eine spielarme Fixierung des Wicklungsträgers 4 bezüglich der Polachse sichergestellt wird. Die Erhebungen 9 verlaufen vorzugsweise länglich in Form von parallel zur Wicklungsachse des Trägerkörpers 4 angeordneten Längsnoppen und vorzugsweise an den schmaleren Seiten des rechtwinkligen Querschnitts des Wicklungsträgers 4.

Vorzugsweise sind einander gegenüberliegende Erhebungen 9 vorzusehen, sodass der zwischen ihnen bestehende Abstand gleich oder etwas weniger als die Dicke des Polkerns 2, auf den der Wicklungsträger aufgeschoben werden soll, beträgt. Dadurch wird beim Aufschieben des Wicklungsträgers 4 auf den entsprechenden Polkern 2 eine Verformung der Erhebungen 9 bewirkt, sodass eine passgenaue Verbindung zwischen dem Wicklungsträger und dem entsprechenden Polkern 2 geschaffen wird. Die Erhebungen 9 können zusätzlich oder alternativ auch an der längeren Seite des rechtwinkligen Querschnittes des Wicklungsträgers 4 einander gegenüberliegend angeordnet sein. Vorzugsweise können auf jeder Seite des rechtwinkligen Querschnitts zwei oder mehr Erhebungen 9 vorgesehen, um eine Verkantung des Wicklungsträgers 4 auf dem Polkern 2 zu vermeiden und um eine Selbstzentrierung und Fixierung zu ermöglichen.

Um die Montage zu erleichtern, sind die Ecken des rechtwinkligen Querschnitts der Innenausnehmung des Wicklungsträgers 4 vorzugsweise mit Aussparungen 10 versehen, so dass Schwierigkeiten bei der Montage aufgrund von Fertigungstoleranzen und unerwünschten Kerbspannungen an den Ecken des rechtwinkligen Querschnitts der Innenausnehmung des Wicklungsträgers vermieden werden können.

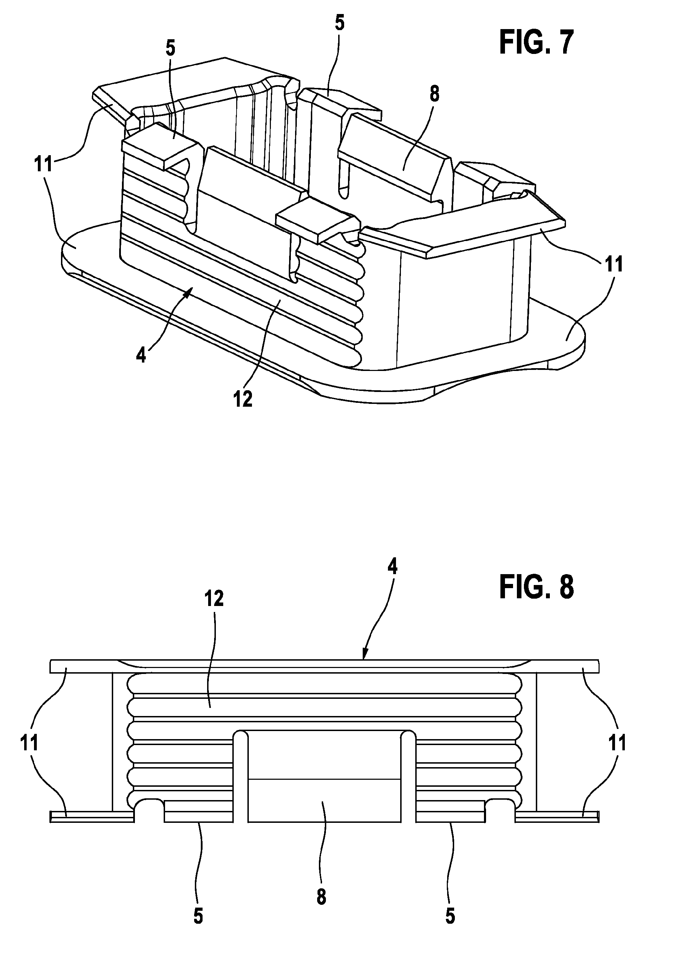

In den Figuren 7 bis 10 ist der Trägerkörper 4 des erfindungsgemäßen Wicklungsträgers ohne Spulenwicklung dargestellt. Man erkennt insbesondere in der Fig. 8, die eine Seitenansicht auf den Wicklungsträger entlang der längeren Seite des rechtwinkligen Querschnitts zeigt, dass sowohl an dem Statorende als auch an dem Rotorende (der im montierten Zustand dem Rotor zugewandten Seite) des Trägerkörpers 4 Wicklungsfixierkragen 11 vorgesehen sind, die vermeiden, dass darauf aufgebrachte Wicklungen der Statorspule 3 von dem Trägerkörper 4 herabrutschen können. Insbesondere an dem Statorende des Wicklungsträgers 4 ist es ausreichend, dass der Wicklungsfixierkragen 11 nur teilweise umlaufend, im gezeigten Ausführungsbeispiel nur an der kleineren Seite des rechtwinkligen Querschnitts vorgesehen sind, da dort, sofern die oben beschriebenen Stützelemente 5 vorgesehen sind, diese ebenfalls eine Funktion des Wicklungsfixierkragens 11 übernehmen.

Weiterhin ist eine äußere Seitenfläche des Wicklungsträgers 4 zumindest teilweise mit Wicklungspositionierrillen 12 versehen, um eine möglichst dichte und gleichmäßige Anordnung der Wicklungen der Statorspule 3 auf dem Trägerkörper 4 zu ermöglichen. Insbesondere helfen die Wicklungspositionierrillen 12 bei dem Aufbringen der Wicklung auf den Trägerkörper 4.

Der Wicklungsfixierkragen 11 an dem Rotorende der Statorspule 3 ist im Wesentlichen umlaufend ausgebildet und steht im Wesentlichen rechtwinklig von der Wicklungsachse des Trägerkörpers 4 ab. Insgesamt ist das Rotorende des Wicklungsträgers 4 entsprechend dem Durchmesser des Rotors geformt und weist eine kreissegmentförmige Einbuchtung 13 auf, um im Bereich des Trägerkörpers 4 möglichst einen gleichmäßigen Abstand zwischen Rotoraußendurchmesser und Rotorende der mit dem Wicklungsträger gebildeten Statorspule 3 erreicht wird.

## Patentansprüche

1. Wicklungsträger, insbesondere für eine Statorwicklung, zum Aufbau eines Elektromotors, mit einem mit einer Innenausnehmung versehenen Trägerkörper (4) zum Aufsetzen auf einen Polkern (2) eines Stators, **dadurch gekennzeichnet, dass** an dem Trägerkörper (4) mindestens ein Ausrichtungselement (5) vorgesehen ist, um den Wicklungsträger im auf dem Polkern (2) montierten Zustand auszurichten.

2. Wicklungsträger nach Anspruch 1, **dadurch gekennzeichnet, dass** als Ausrichtungselement (5) ein oder mehrere Stützelemente (5) vorgesehen sind, die an einem Ende des Trägerkörpers (4) nach außen abstehen, so dass sich die Stützelemente (5) im montierten Zustand an einer Fläche des Stators anlegen.

3. Wicklungsträger nach Anspruch 2, **dadurch gekennzeichnet, dass** ein Winkel zwischen einer Längsachse des Trägerkörpers (4) und dem abstehenden Stützelement (5) so gewählt ist, dass der Winkel gleich oder größer ist als ein Winkel zwischen der Längsachse des Polkerns (2) und einer Innenfläche des Stators (1), an der das entsprechende Stützelement (5) anliegt, so dass die Ausrichtung des Trägerkörpers (4) durch die Anlagestellen der Stützelemente (5) an der Innenfläche des Stators (1) bestimmt ist.

4. Wicklungsträger nach Anspruch 3, **dadurch gekennzeichnet, dass** ein oder mehrere Befestigungselemente (8) vorgesehen sind, die ausgebildet sind, um mit einer Haltevorrichtung (6) an dem Polkern (2) zusammen zu wirken, so dass der Trägerkörper (4) an dem Polkern (2) gehalten wird.

5. Wicklungsträger nach Anspruch 4, **dadurch gekennzeichnet, dass** die Befestigungselemente (8) als Rastelemente ausgebildet sind, um in die entsprechende als Halteausnehmung (6) ausgebildete Haltevorrichtung an dem entsprechenden Polkern (2) einzugreifen.

6. Wicklungsträger nach Anspruch 4 oder 5, **dadurch gekennzeichnet, dass** der Winkel zwischen einer Längsachse des Trägerkörpers (4) und dem abstehenden Stützelement (5) so gewählt ist, dass er größer ist als der Winkel zwischen der Längsachse des Polkerns (2) und der Innenfläche des Stators (1), und wobei das eine oder die mehreren Stützelemente (5) elastisch verformbar sind, so dass die Stützelemente (5) im durch die Befestigungselemente (8) an dem Stator (1) fixierten Zustand elastisch verformt an der Innenfläche des Stators (1) anliegen und eine Kraft entgegen der Aufsetzrichtung des Trägerkörpers (4) auf den Polkern (2) wirkt.

7. Wicklungsträger nach einem der Ansprüche 1 bis 6, **dadurch gekennzeichnet, dass** an mindestens einem Ende des Trägerkörpers (4) ein zumindest teilweise umlaufender Wicklungsfixierkragen (11) vorgesehen ist, um eine Wicklung auf dem Trägerkörper (4) zu halten.

8. Wicklungsträger nach einem der Ansprüche 1 bis 7, **dadurch gekennzeichnet, dass** an einer Außenseite des Trägerkörpers (4) eine Wicklungspositioniereinrichtung (12) vorgesehen ist, um eine darauf aufgebrachte Wicklung zu halten.

9. Wicklungsträger nach einem der Ansprüche 1 bis 8, **dadurch gekennzeichnet, dass** an einer Innenseite des Trägerkörpers (4) eine oder mehrere Erhebungen (9), insbesondere in Form von länglichen Erhebungen (9) in Richtung eine Mittenachse des Trägerkörpers (4), vorgesehen sind, um sich beim Aufsetzen des Wicklungsträger auf den entsprechenden Polkern (2) zumindest teilweise elastisch zu verformen und so den Wicklungsträger an dem Polkern (2) zu fixieren.

10. Elektromotor mit einem Polkern und einem darauf aufgebrachten Wicklungsträger nach einem der Ansprüche 1 bis 9.

11. Elektromotor mit einem Polkern (2) und einem darauf aufgebrachten Wicklungsträger nach einem der Ansprüche 4 bis 6, wobei eine Haltevorrichtung (6) an dem Polkern (2) vorgesehen ist, um mit dem Befestigungselement (8) zusammen zu wirken, so dass der Trägerkörper (4) an dem Polkern (2) gehalten wird.
